# EUROPÄISCHE PATENTSCHRIFT

(11) **EP 1 662 185 B1**
(45) Veröffentlichungstag und Bekanntmachung des Hinweises auf die Patenterteilung: **16.07.2008**
(21) Anmeldenummer: 05024495.3
(22) Anmeldetag: 10.11.2005
(51) Int. Cl.: F16H 61/20, F16H 63/44

(54) **Verfahren und Steuerungsvorrichtung zum sicheren Trennen eines Antriebsstranges**
Method and control device to securely interrupt the power flow in a driveline
Procédé et système de commande pour interrompre en toute sécurité la transmission dans la chaine cinématique

(30) Priorität: 26.11.2004 DE 102004057127
(43) Veröffentlichungstag der Anmeldung: 31.05.2006
(73) Patentinhaber: ZF FRIEDRICHSHAFEN Aktiengesellschaft, 88038 Friedrichshafen (DE)
(72) Erfinder: Bachmann, Volker, 88097 Eriskirch (DE); Steinborn, Mario, 88046 Friedrichshafen (DE); Kalthoff, Rudolf, 88250 Weingarten (DE)

(56) Entgegenhaltungen:
- EP-A- 0 985 860
- EP-A- 1 035 357
- EP-A- 1 092 894
- WO-A-02/092378
- DE-A1- 19 926 697

## Beschreibung

Die Erfindung betrifft ein Verfahren und eine Steuerungsvorrichtung zur Steuerung zumindest eines automatisierten Getriebes in einem Antriebsstrang gemäß dem Oberbegriff des Patentanspruchs 1 beziehungsweise des Anspruchs 6.

Automatisiert schaltbare Getriebe werden seit geraumer Zeit in unterschiedlichen Kraftfahrzeugtypen genutzt. Insbesondere bei Nutzfahrzeugen sind dabei im Antriebsstrang mehrere dieser Getriebe angeordnet, wobei beispielsweise ein erstes Getriebe eine Mehrzahl unterschiedlicher Übersetzungsstufen und eine oder mehrere Neutralstellungen bereitstellt, während ein zweites Getriebe beispielsweise genau zwei unterschiedliche Übersetzungsstufen sowie eine Neutralstellung ermöglicht. Durch eine Kombination beider Getriebe ergibt sich daher eine Verdoppelung der möglichen Fahrgänge.

Daneben sind vielfältige Getriebebauarten bekannt, in denen zwei oder mehrere automatische Getriebe zu einer baulichen Einheit zusammengefasst sind. Ein solches Gruppengetriebe kann beispielsweise aus einem Hauptgetriebe, einem sogenannten Splitter und einer Rangegruppe bestehen. Daneben ist es möglich, dass in den Antriebsstrang weitere schaltbare Getriebe, wie z.B. schaltbare Verteilergetriebe integriert sind, welche ebenfalls eine Neutralstellung ermöglichen.

Im Folgenden wird unter einem schaltbaren Getriebe bzw. einem Schaltgetriebe eine Vorrichtung zur Übertragung von Drehmomenten und Drehzahlen verstanden, wobei zumindest zwei unterschiedliche Übersetzungsverhältnisse und eine Neutralstellung ohne wesentliche Drehmomentübertragung zwischen Getriebeeingangswelle und Getriebeausgangswelle wählbar sind. Ein automatisiertes Getriebe zeichnet sich durch eine Betätigungsmöglichkeit ohne direkten Eingriff des Bedieners aus und umfasst neben Getrieben, bei denen aufgrund einer Auswertung vorliegender Parameter selbstständig unterschiedliche Übersetzungsverhältnisse eingestellt werden, auch Getriebe, bei welchen zumindest eine Änderung des Übersetzungsverhältnisses und/oder eine Schaltung des Getriebes in eine Neutralstellung ohne manuellen Eingriff eines Bedieners bewirkt werden kann. Die Ansteuerung kann dabei beispielsweise hydraulisch, pneumatisch oder elektrisch erfolgen.

Der Antriebsstrang stellt die Verbindung zwischen einer Momentenquelle, die im Falle eines Kraftfahrzeuges zumeist ein Kolben-Verbrennungsmotor ist, und einer anzutreibenden Momentensenke her, die bei Kraftfahrzeugen üblicher Weise durch die angetriebenen Räder eines Kraftfahrzeuges gebildet wird. Für das erfindungsgemäße Verfahren ist die Art der Momentenquelle und Momentensenke unerheblich. Beispielsweise kann die Momentenquelle durch einen Elektromotor oder durch eine Kombination verschiedener Motoren gebildet sein. Die Momentensenke kann beispielsweise auch aus einem angetriebenen Zusatzaggregat eines Fahrzeugs oder aus einer stationär arbeitenden Maschine bestehen.

Insbesondere bei Fahrzeugen mit automatisierten Schaltgetrieben kann es notwendig sein, den Antriebsstrang zu trennen, ohne dass hierfür ein expliziter Fahrerwunsch in Form einer manuellen Schaltbetätigung vorliegt. Bei Stillstand des Fahrzeugs und/oder bei Betätigung einer Bremsvorrichtung kann ein Getriebe in die Neutralstellung gebracht werden; um eine in unangesteuertem Zustand geschlossene Kupplung wieder entlasten zu können, ohne dass ein Lösen der Bremse zu einer Momentenübertragung vom Motor auf die angetriebenen Räder und damit zu einem ungewollten Losfahren des Fahrzeugs führt.

Daneben ist eine automatisierte Schaltung eines Getriebes in die Neutralstellung jedoch auch in anderen Fällen denkbar und wünschenswert, beispielsweise bei Überschreitung einer vorbestimmten Zeitspanne seit dem Stillstand des Fahrzeugs, beim Ausfall des Antriebsmotors oder bei bestimmten Betriebszuständen von Zusatzaggregaten. Es kann beispielsweise gewünscht sein, bei geöffneter Motorhaube, geöffneter Tür oder unbesetztem Fahrerplatz ein Losrollen des Fahrzeugs durch Schalten in die Getriebe-Neutralstellung zu verhindern.

Nach dem bekannten Stand der Technik kann es jedoch vorkommen, dass zum Zeitpunkt des Schließens der zuvor geöffneten Kupplung noch ein Gang eingelegt ist, weil beispielsweise die Einstellung der Neutralstellung aufgrund eines Sensorfehlers falsch erkannt wird. Dies kann zu unerwünschten und auch gefährlichen Betriebszuständen führen, wenn sich das Fahrzeug beispielsweise ungewollt und unvorhergesehen in Bewegung setzt oder ein Zusatzaggregat selbsttätig anläuft. Weiter kann ein Schließen des Kraftflusses bei nur teilweise eingelegtem Gang oder allgemein bei nicht definierten Betriebszuständen zu erheblichem Verschleiß oder auch zu einer sofortigen Zerstörung von Teilen des Antriebsstranges führen.

Vor diesem Hintergrund ist aus der DE 101 52 857 A1 ein Verfahren zur Schaltung eines Mehrgruppengetriebes bekannt, welches aus einer Vorschaltgruppe, einer Hauptschaltgruppe und einer Bereichsgruppe besteht, wobei das Bereichsgruppengetriebe eine erste Schaltstellung für eine langsame Getriebegesamtübersetzung, eine zweite Stellung für eine schnelle Getriebegesamt- übersetzung und eine dritte Schaltstellung als Neutralstellung umfasst. Bei Gängwechsein, welche ein Schalten des Bereichsgruppengetriebes umfassen, werden gleichzeitig das Bereichsgruppengetriebe und das Vorschaltgruppengetriebe in die Neutralstellung gebracht, um die Schaltzeiten zu verkürzen und ein Abbremsen des Hauptgetriebes sowie damit ein geräuschfreies Schalten desselben zu ermöglichen.

Schaltvorgänge, an denen das Bereichsgruppengetriebe nicht beteifigt ist, das heißt bei denen die Schaltstellung des Bereichsgruppengetriebes vor und nach dem Schalten identisch ist, werden auf herkömmlich Weise geschaltet. Die DE 101 52 857 A1 befasst sich weder mit der Problematik eines unbeabsichtigten Losrollens des Fahrzeugs aufgrund einer fälschlich angenommenen Getriebe-Neutralstellung, noch ist eine Strategie zur Lösung dieser Problematik aus dem Vorschlag ableitbar, bei ganz bestimmten Schaltvorgängen zwei Getriebe gleichzeitig in eine Neutralstellung zu bringen, um diese bestimmten Schaltvorgänge schneller oder geräuschärmer durchführen zu können.

Die EP 1092 894 A2 offenbart einen Antriebsstrang eines Fahrzeugs umfassend ein Gruppengetriebe mit einer Hauptgetriebegruppe und einer Splittergruppe, eine Hauptreibungskupplung und eine Kupplungsbremse. Bei einer Erfassung, dass die Fahrzeuggeschwindigkeit kleiner ist als ein Referenzwert, die Hauptreibungskupplung ausgerückt ist und eine Schaltung in den Leerlauf der Hauptgetriebegruppe stattfindet, wird veranlasst, dass die Splittergruppe in eine Splitter-Leerlaufstellung geschattet wird. Nachdem in der Hauptgetriebegruppe eine geeignete Anfahrübersetzung eingelegt wurde, wird auch in der Splittergruppe eine geeignete Splitterübersetzung eingelegt. Durch das in der EP 1 092 894 A2 beschriebene Verfahren zur Steuerung des Gruppengetriebes können Verschleiß und Beschädigungen der Kupplungsbremse minimiert bzw. vermieden werden.

Zudem ist aus der DE 199 26 697 A1 eine gattungsbildende Steuerungsvorrichtung für ein automatisiertes Mehrganggetriebe für ein Kraftfahrzeug bekannt, bei dem dann, wenn sich das Fahrzeug in einem nicht fahrbereiten Zustand befindet, es im wesentlichen steht, die Reibungskupplung getrennt ist, ein Gang eingelegt ist und der Motor des Fahrzeugs läuft, der Antrieb des Fahrzeugs durch den Motor dadurch vollständig verhindert wird, dass das Getriebe durch die Steuerungsvorrichtung in dessen Neutralzustand geschattet wird. Ziel ist die Verhinderung von gefährlichen Situationen, welche beispielsweise durch ein fehlerhaftes oder ungewolltes Schließen der Kupplung bei eingelegtem Gang oder durch Betätigung des Fahrpedalgestänges durch eine am Motorraum arbeitende Person entstehen können. Die mögliche Fehlerhaftigkeit eines die Neutralposition des Getriebes bedeutenden Signals bzw. die unerkannte nicht ordnungsgemäße Ausführung eines Schaltsignals zur Einnahme einer Getriebe-Neutralstellung ist als Fehlerquelle nicht erkannt und eine Lösung dieses Problems ist im Rahmen dieser Schrift nicht vorgesehen. Wenn im Steuergerät fälschlich die Information vorliegt, dass das Getriebe sich in der Neutralstellung befindet, wird die Kupplung geschlossen, womit sich das Fahrzeug ungewollt in Bewegung setzen könnte.

Die Information darüber, dass sich ein Getriebe in einer Neutralstellung befindet, kann beispielsweise in Form eines Sensorsignals explizit vorliegen. Eine solche Information liegt jedoch auch dann implizit vor, wenn beispielsweise kein entsprechender Sensor vorgesehen ist und nach der Ausgabe eines Befehls zur Einnahme der Neutralstellung eine Zeitspanne verstrichen ist, welche im Normalbetrieb zur Umsetzung dieses Befehls ausreicht.

Vor diesem Hintergrund liegt der Erfindung die Aufgabe zugrunde, ein Steuerungsverfahren und eine entsprechende Vorrichtung zur Durchführung des Verfahrens für ein automatisiertes Schaltgetriebe vorzustellen, mit denen auch dann ein ungewolltes Anrollen des Fahrzeugs bzw. ein ungewolltes Anlaufen eines Aggregates verhindert werden kann, wenn in der Steuerung fälschlich die Information vorliegt, dass sich ein Schaltgetriebe in einer Neuralstellung befindet.

Die Lösung dieser Aufgabe ergibt sich für das Verfahren aus den Merkmalen des Hauptanspruchs und für die Steuerungsvorrichtung aus den Merkmalen des Anspruchs 6, während vorteilhafte Ausgestaltungen und Weiterbildungen der Erfindung den Unteransprüchen entnehmbar sind.

Der Erfindung liegt die Erkenntnis zugrunde, dass häufig mehrere Getriebe oder Getriebeabschnitte in einem Antriebsstrang vorhanden sind, welche jeweils ein automatisiertes Schaltgetriebe in dem Sinne bilden, dass sie zumindest zwei Arbeitsübersetzungen und eine Neutralstellung ohne oder zumindest mit unerheblicher Momentenübertragung bereitstellen. Wenn in dem Steuergerät fälschlich die Information vorliegt, dass sich ein automatisiertes Schaltgetriebe in einer Neutralstellung befindet und aufgrund dieser Information eine zuvor offene Kupplung des Antriebsstranges schließt, kann dies zu gefährlichen Situationen und/oder zu einer Beschädigung von Komponenten des Antriebsstranges führen. Dies lässt sich erfindungsgemäß dadurch vermeiden, dass zumindest zwei automatisierte Schaltgetriebe in eine Neutralstellung geschaltet werden, bevor die zuvor offene Kupplung des Antriebsstranges geschlossen wird. Es versteht sich dabei von selbst, dass hier nur solche Neutralstellungen gemeint sind, die in bezug auf den Antriebsstrang auch wirksam sind, die also geeignet sind, den Momentenfluss von der Momentenquelle zur Momentensenke zu unterbrechen.

Demnach geht die Erfindung von einem Verfahren zur Steuerung eines Antriebsstranges aus, welcher zumindest eine automatisierte Kupplung, zumindest ein automatisiertes Schaltgetriebe, eine Steuerungsvorrichtung zur Steuerung der zumindest einen automatisierten Kupplung und des zumindest einen automatisierten Schaltgetriebes sowie zumindest zwei Getriebeleerlaufstellen im Antriebsstrang aufweist, an welchen eine mechanische Neutralstellung eines Getriebes eingestellt werden kann.

Zur sprachlichen Vereinfachung bezeichnet der Begriff Getriebeleerlaufstelle" hier eine Stelle oder auch einen Bereich im Aritriebsstrang, an dem die Möglichkeit besteht, den Momentenfluss durch Einstellung einer Neutralstellung zu unterbrechen. Dabei können auch mehrere Getriebeleerlaufstellen in einem Getriebe vorhanden sein, sofern, an mehreren Stellen jeweils eine Neutralstellung des Getriebes bewirkt werden kann. Solche Getriebeleerlaufstellen im Antriebsstrang können demnach beispielsweise in einem Hauptgetriebe, einem Splitter, einer Rangegruppe und/oder in einem schaltbaren Verteilergetriebe ausgebildet sein.

Zur Lösung der gestellten Aufgabe ist vorgesehen, dass die Steuerungsvorrichtung bei einer Schaltung zumindest eines automatisierten Schaltgetriebes in eine Neutralstellung zumindest an zwei Getriebeleerlaufstellen die Neutralstellung einstellt und die Steuereinrichtung zumindest eine zum Zeitpunkt der Verstellung des zumindest einen automatisierten Schaltgetriebes in die Neutralstellung geöffnete Kupplung zumindest so lange offen hält, bis im Steuergerät die Information vorliegt, dass zumindest an zwei Getriebeleerlaufstellen im Antriebsstrang die mechanische Neutralstellung eingestellt ist.

Dabei ist es unerheblich, ob die Getriebeleerlaufstellen sämtlich innerhalb eines Getriebes liegen, wie dies beispielsweise bei einem Fahrzeug mit einem Gruppengetriebe der Fall sein kann, oder ob sich eine oder mehrere Getriebeleerlaufstellen in baulich von dem ersten Getriebe getrennten Einheiten des selben Antriebsstranges befinden. Auch ist es hier nicht entscheidend, ob die Einstellung der Neutralstellung an den Gebiebeleerlaufstellen jeweils zum erwarteten Erfolg führt. Gerade wenn das Einstellen der Neutralstellung an einer Getriebeleerlaufstelle misslingt, entfaltet sich die technische Schutzwirkung des Verfahrens gemäß der Erfindung. Der Begriff "Einstellen der Neutralstellung" ist in diesem Zusammenhang daher ausschließlich im Sinne einer Ausgabe einer entsprechenden Anweisung durch die Steuerungsvorrichtung zu verstehen.

In einer bevorzugten Ausführungsform des erfindungsgemäßen Verfahrens stellt die Steuerungsvorrichtung bei einer Einstellung zumindest eines automatisierten Schaltgetriebes in eine Neutralstellung zumindest an zwei Getriebeleerlaufstellen die Neutralstellung ein, wenn die Schaltung in die Neutralstellung nicht auf einen direkten Fahrerwunsch zurückzuführen ist und sich die Momentensenke zumindest annähernd im Stillstand befindet. Mit Stillstand der Momentensenke ist hier beispielsweise der Stillstand von Fahrzeugrädern gemeint.

Sofern ein Fahrer beispielsweise durch den Gangwahlhebel eines Fahrzeugs mit einem Automatgetriebe einen direkten Wunsch zur Herbeiführung einer Neutralstellung äußert, kann es vorteilhaft sein, nur genau ein automatisiertes Schaltgetriebe in eine Neutralstellung zu bringen, um beispielsweise die Zeit für das erneute Einlegen eines Fahrganges zu verkürzen. Sollte es hierbei, etwa durch einen fehlerhaften Sensor, zu einer Fehlfunktion kommen und fälschlich nicht die Neutralstellung eingestellt werden, so wird der Fahrer dies in der Regel unmittelbar bemerken und negative Folgen beispielsweise durch Betätigen des Bremspedals oder Abstellen des Motors verhindern.

Wenn jedoch der Momentenfluss durch Anwahl einer Neutralstellung eines automatisierten Schaltgetriebes ohne direkte Anweisung des Fahrers unterbrochen werden soll, um beispielsweise die Kupplung nach einer gewissen Zeit wieder entlasten zu können, kann eine entsprechende Reaktion des Fahrers nicht sicher erwartet werden.

Es ist beispielsweise möglich, dass dieser die Feststellbremse nur leicht betätigt, welches automatisch zu einer Trennung des Antriebsstranges durch eine Kupplung führt. Nachdem der Fahrer das Fahrzeug verlassen hat, sendet die Steuerung nach einer gewissen Zeit einen Befehl zur Einstellung der Neutralstellung an das Hauptgetriebe und entlastet nach Erhalt einer Ausführungsbestätigung in Form eines Sensorwertes oder nach einer vorbestimmten Zeitspanne die Kupplung, welches zu einem Schließen der Kupplung führt.

Sofern das Einstellen der Neutralstellung fehlgeschlagen ist, der Steuerungsvorrichtung aber z.B. aufgrund eines defekten Sensors die falsche Information vorliegt, dass der Befehl korrekt umgesetzt wurde, würde das Schließen der Kupplung zu einem Anfahren des fahrerlosen Fahrzeugs führen, wenn es nicht durch das erfindungsgemäße Verfahren verhindert würde.

Während sich das bis hierher vorgestellte Verfahren auf die redundante Einstellung der Neutralstellung bezieht, wird durch diese Ausgestaltung des Verfahrens sichergestellt, dass zumindest eine Kupplung, welche zum Zeitpunkt der Verstellung der automatisierten Schaltgetriebe in die Neutralstellung offen ist, auch tatsächlich so lange geöffnet bleibt, bis im Steuergerät die Information einer erfolgreichen eingestellten Neutralstellung an zwei Getriebeleerlaufstellen vorliegt. Entscheidend ist dabei, dass in der Steuerungsvorrichtung aufgrund bestimmter Sensorsignale oder sonstiger Indizien die Information vorliegt, dass die Neutralstellung an beiden Getriebeleerlaufstellen realisiert wurde. Im einfachsten Fall kann das Steuergerät das Schließen der Kupplung bis nach Ablauf einer vorbestimmten Zeitspanne verhindern, die im Normalbetrieb zum Einstellen einer Neutralstellung an zwei Getriebeleerlaufstellen ausreicht.

Ein weiterer Sicherheitsgewinn ergibt sich dann, wenn in der Steuerungsvorrichtung die Information, dass zumindest an zwei Getriebeleerlaufstellen im Antriebsstrang die mechanische Neutralstellung eingestellt ist, nur dann vorliegt, wenn ein entsprechendes Sensorsignal von zumindest einer der Getriebeleerlaufstellen in der Steuerungsvorrichtung vorhanden ist. Bis diese durch das Sensorsignal gestützte Information in der Steuerungsvorrichtung vorliegt, verhindert diese ein Schließen der zuvor offenen Kupplung. Gegenüber dem bisher erläuterten Verfahren ergibt sich ein weiterer Sicherheitsvorteil daraus, dass zumindest für eine Getriebeleerlaufstelle eine Rückmeldung über die korrekte Ausführung des Befehls zur Einstellung der Neutralstellung in Form eines Sensorsignals vorliegen muss, bevor die Steuerungsvorrichtung den Befehl zum Schließen der geöffneten Kupplung erzeugt.

Dabei wird ausgenutzt, dass oft die Schaltstellung bestimmter Getriebeelemente ohnehin durch Sensoren überwacht wird, während andere Getriebeelemente nicht durch eigene Sensoren überwacht werden. Ein optimales Verhältnis von Sicherheit und Aufwand ergibt sich dann, wenn die Steuerungsvorrichtung die ohnehin vorhandenen Sensorsignale von Getriebeleerlaufstellen auswertet, auf zusätzliche Sensoren aber verzichtet wird. Ein Sensorsignal in diesem Sinne kann neben einem expliziten Sensorsignal über die Stellung einer Getriebeleerlaufstelle selbstverständlich auch ein Signal oder eine Kombination mehrerer Signale über eine oder mehrere andere Größen sein, solange sich hieraus eine Aussage Ober die Stellung der Getriebeleerlaufstelle ableiten lässt.

Die favorisierte Ausgestaltung des Verfahrens sieht jedoch vor, dass in der Steuerungsvorrichtung dann die Information vorliegt, dass zumindest an zwei Getriebeleerlaufstellen im Antriebsstrang die mechanische Neutralstellung eingestellt ist, wenn ein entsprechendes Sensorsignal für zumindest zwei dieser Getriebeleerlaufstellen an der Steuerungsvorrichtung signaltechnisch anliegt, und die Steuerungsvorrichtung bis zum vorliegen dieser Information ein Schließen der Kupplung verhindert.

Die notwendigen Sensoren zur Ermittlung der Stellung des Getriebes sind bei modernen Getrieben oft ohnehin vorhanden oder die korrekte Einstellung der Neutralstellung lässt sich aus anderen Sensorwerten leicht ableiten. Durch die Überprüfung der korrekten Durchführung des Neutralstellungsbefehls an zumindest zwei Getriebeleerlaufstellen ist eine doppelte Redundanz gegeben. Eine Fehlfunktion des Systems ist in diesem Fall nur noch dann zu befürchten, wenn beide oder alle Getriebeleerlaufstellen, an die ein Befehl zur Einnahme der Neutralstellung gesendet wurde, diesen Befehl nicht ausführen, und gleichzeitig an mindestens zwei der entsprechenden Sensoreingänge des Steuergerätes ein Signal für eine korrekte Ausführung des Befehls anliegt.

Sollte ein Befehl zur Einstellung der Neutralstellung an drei oder mehr Getriebeleerlaufstellen gesendet werden, so genügt es für einen sicheren Betrieb dennoch, wenn an zwei entsprechenden Sensoreingängen ein Signal für eine ordnungsgemäße Durchführung des Befehls anliegt. Auf diese Weise führt ein falsches Sensorsignal noch nicht zu einer dauerhaften Blockierung der Aufhebung des Kupplungssignals.

Zur Durchführung des Verfahrens kann eine Steuerungsvorrichtung zur Steuerung eines Antriebsstranges genutzt werden, wobei der Antriebsstrang zumindest eine automatisierte Kupplung, zumindest ein automatisiertes Schaltgetriebe und zumindest zwei Getriebeleerlaufstellen im Antriebsstrang aufweist, an welchen eine mechanische Neutralstellung eines Getriebes eingestellt werden kann. Innerhalb dieser Steuerungsvorrichtung ist gemäß der Erfindung eine Untervorrichtung vorgesehen, welche bei einem Schaltvorgang zumindest eines automatisierten Schaltgetriebes in eine Neutralstellung an zumindest zwei Getriebeleerlaufstellen ein Signal zur Einstellung der Neutralstellung abgibt und innerhalb der Steuerungsvorrichtung zusätzlich eine Untereinheit vorgesehen ist, durch die an zumindest eine Kupplung, die zum Zeitpunkt des Schaltvorganges des zumindest einen automatisierten Schaltgetriebes in die Neutralstellung geöffnet ist, zumindest so lange ein Öffnungssignal abgegeben wird, bis an der Steuerungsvorrichtung zumindest ein Sensorsignal für die Bestätigung der Einstellung der mechanischen Neutralstellung an zumindest einer Getriebeieerlaufstelle anliegt.

Bevorzugt erfolgt diese Signalabgabe so lange, bis der Steuerungsvorrichtung zumindest zwei Sensorsignale über die Bestätigung der Einstellung der mechanischen Neutralstellung an zumindest zwei Getriebeleerlaufstellen vorliegen.

Durch diese Ausgestaltung wird sichergestellt, dass nicht nur der Befehl an mindestens zwei Getriebeleerlaufstelien ausgegeben wird, in die Neutralstellung zu wechseln, sondern dass zumindest für eine Getriebeleerlaufstelle die korrekte Ausführung dieses Befehls durch ein Sensorsignal überwacht wird, bevor die bis dahin offene Kupplung geschlossen wird.

Durch eine solche Steuerungsvorrichtung kann das erfindungsgemäße Verfahren mit sehr geringem Aufwand durchgeführt werden, da in der Regel ohnehin ein Steuergerät zur Ansteuerung und/oder Regelung der Kupplungen und Getriebe des Antriebsstranges vorhanden ist. Die Untervorrichtung lässt sich in vielen Fällen bei der Auslegung des Steuergerätes ohne oder mit nur sehr geringen Kosten implementieren. Die Untervorrichtung kann auch aus einem ansonsten für andere Zwecke verwendeten Bereich einer elektronischen Schaltung bestehen, der bei Bedarf durch Laden eines entsprechenden Programms für diesen Zweck zur Verfügung gestellt wird.

Wenn durch die Steuerungsvorrichtung bei einem Schaltvorgang zumindest eines automatisierten Schaltgetriebes in eine Neutralstellung zumindest an zwei Getriebeleertaufstellen die Neutralstellung durch die Steuerungsvorrichtung nur dann einstellt wird, wenn eine Entscheidungseinheit ermittelt, dass der Schaltvorgang nicht auf einen direkten Fahrerwunsch zurückzuführen ist, ermöglicht dies eine Erkennung von direkt durch den Fahrer veranlassten Schaltvorgängen in die Neutralstellung eines Getriebes. Wie schon beschrieben kann es vorteilhaft sein, bei diesen Schaltvorgängen auf die Durchführung des Verfahrens zu verzichten, um beispielsweise die Zeit für ein erneutes Einlegen eines Ganges zu verkürzen.

Selbstverständlich kann die Sicherheit noch weiter erhöht werden, wenn zwei oder noch mehr Getriebeleerlaufstellen auf die korrekte Neutralstellung überwacht werden und die Kupplung nur dann geschlossen wird, wenn zumindest von zwei der Getriebeleerlaufstellen eine positive Rückmeldung vorliegt, dass der Neutralstellungsbefehl wie gewünscht ausgeführt wurde.

Die beschriebene Vorrichtung lässt sich für vielfältige Anwendungen nutzbringend einsetzen. Ganz besonders geeignet ist diese jedoch zur Steuerung und Regelung des Antriebsstrangs eines Kraftfahrzeugs, insbesondere eines Nutzfahrzeuges. Die benötigten Elemente und Sensoren sind hier oft ohnehin weitgehend vorhanden, wodurch der zusätzlich notwendige Aufwand gering gehalten werden kann. Zudem ist auch der Nutzen der Vorrichtung besonders hoch, da ohne die erfindungsgemäße Vorrichtung das Risiko besteht, dass ein Kraftfahrzeug sich im schlimmsten Fall selbsttätig in Bewegung setzt. Aritriebsstränge von Nutzfahrzeugen, wie Lastkraftwagen, weisen oft bereits mehrere Getriebeleerlaufstellen auf und sind daher für die Umsetzung der Erfindung besonders gut geeignet.

Wenn das zumindest eine automatisierte Schaltgetriebe ein Getriebe umfasst, welches ein Hauptgetriebe, einen Splitter und eine Rangegruppe beinhaltet, sind bereits innerhalb dieses Getriebes mehrere Getriebeleerlaufstellen und zusätzlich auch eine übergreifende Steuerung der verschiedenen Getriebeuntergruppen vorhanden, wodurch der Aufwand für die Implementierung einer erfindungsgemäßen Vorrichtung besonders gering gehalten werden kann.

Die Erfindung lässt sich anhand eines Ausführungsbeispiels weiter erläutern. Darin wird von einem Lastkraftwagen mit einem Getriebe mit einem Hauptgetriebe, einem Splitter und einer Rangegruppe ausgegangen, welche jeweils eine eigenständige Möglichkeit zur Unterbrechung des Antriebsstranges durch Einstellung einer Neutralposition aufweisen. Alle Untergetriebe werden von einer gemeinsamen Steuerungsvorrichtung angesteuert und für das Hauptgetriebe und die Rangegruppe ist jeweils ein Sensor vorhanden, durch dessen Signal das Vorliegen einer Neutralstellung des jeweiligen Getriebes überwacht werden kann.

In einer konkreten Betriebssituation bremst der Fahrer sein Fahrzeug bis zum Stillstand ab und zieht die Handbremse leicht an. Er ist in einem Modus mit automatischer Gangwahl gefahren und bei dieser Art der Schaltung wird bei Betätigung der Handbremse im Stillstand automatisch die Fahrkupplung geöffnet, damit das Fahrzeug nicht gegen die Handbremse anzurollen versucht.

Da die Fahrkupplung in unbetätigtem Zustand geschlossen ist, sieht ein Steuerungsprogramm vor, dass nach einer gewissen Zeitspanne mit durchgehend geöffneter Fahrkupplung am Hauptgetriebe die Neutralstellung gewählt und anschließend die Kupplung durch Schließen entlastet wird. Es wird weiter angenommen, dass aus irgendeinem Grund der Schaltbefehl an das Hauptgetriebe nicht zur Einlegung der Neutralstellung führt. Ohne eine erfindungsgemäße Einrichtung bzw. ein erfindungsgemäßes Verfahren würde nun die Fahrkupplung entlastet und damit geschlossen. Da das Hauptgetriebe sich jedoch nicht in der Neutralstellung befindet, rollt das Fahrzeug nun gegen die nur unzureichend angezogene Handbremse an. Falls der Fahrer seinen Platz im Fahrerhaus verlassen hat, um beispielsweise die Frontscheibe zu reinigen, kommt es zu einer gefährlichen Situation.

Durch die erfindungsgemäße Vorrichtung wird sichergestellt, dass die Getriebesteuerung erkennt, dass es sich bei dem Befehl zur Einstellung einer Neutralpösition des Hauptgetriebes nicht um einen manuell vom Fahrer ausgelösten Befehl handelt. Daher wird vor dem Eintreten der geschilderten Gefahrensituation neben dem Befehl an das Hauptgetriebe auch ein entsprechender Befehl an das Rangegetriebe zur Einstellung einer Neutralstellung gegeben, und ein Schließen der Fahrkupplung so lange verhindert, bis die ordnungsgemäße Einstellung beider Neutralpositionen durch entsprechende Sensorsignale bestätigt wird.

## Patentansprüche

1. Verfahren zur Verhinderung eines ungewollten Anrollens aus dem Stillstand in einem Antriebsstrang, welcher zumindest eine automatisierte Kupplung, zumindest ein automatisiertes Schaltgetriebe, eine Steuerungsvorrichtung zur Steuerung der zumindest einen automatisierten Kupplung und des zumindest einen automatisierten Schaltgetriebes sowie zumindest eine Getriebeleerlaufstelle im Antriebsstrang aufweist, an welcher eine mechanische Neutralstellung des Getriebes einstellbar ist, **dadurch gekennzeichnet, dass** die Steuerungsvorrichtung bei einer Schaltung zumindest des automatisierten Schaltgetriebes in die Neutralstellung zumindest an zwei Getriebeleerlaufstellen im Antriebsstrang eine Neutralstellung einstellt und die Steuerungsvorrichtung zumindest eine zum Zeitpunkt der Verstellung des zumindest einen automatisierten Schaltgetriebes in die Neutralstellung geöffnete Kupplung zumindest so lange offen hält, bis in der Steuerungsvorrichtung die Information vorliegt, dass zumindest an den beiden Getriebeleerlaufstellen im Antriebsstrang die mechanische Neutralstellung eingestellt ist.

2. Verfahren nach Anspruch 1, **dadurch gekennzeichnet, dass** die Steuerungsvorrichtung bei einer Einstellung zumindest des automatisierten Schaltgetriebes in die Neutralstellung zumindest an den beiden Getriebeleerlaufstellen die Neutralstellung einstellt, wenn die Schaltung in die Neutralstellung nicht auf einen direkten Fahrerwunsch zurückzuführen ist.

3. Verfahren nach Anspruch 1 oder 2, **dadurch gekennzeichnet, dass** in der Steuerungsvorrichtung dann die Information vorliegt, dass zumindest an den beiden Getriebeleerlaufsteilen im Antriebsstrang die mechanische Neutralstellung eingestellt ist, wenn ein entsprechendes Sensorsignal für zumindest eine der Getriebeieerlaufstellen in der Steuerungsvorrichtung vorliegt, und die Steuerungsvorrichtung bis zum Vorliegen dieser Information ein Schließen der Kupplung verhindert.

4. Verfahren nach Anspruch 1 oder 2, **dadurch gekennzeichnet, dass** in der Steuerungsvorrichtung dann die information vorliegt, dass zumindest an den beiden Getriebeleerlaufstelten im Antriebsstrang die mechanische Neutralstellung eingestellt ist, wenn ein entsprechendes Sensorsignal für zumindest zwei dieser Getriebeleerlaufstellen in der Steuerungsvorrichtung vorliegt, und die Steuerungsvorrichtung bis zum Vorliegen dieser Information ein Schließen der Kupplung verhindert.

5. Verfahren nach einem der vorherigen Ansprüche, **dadurch gekennzeichnet, dass** zur Einstellung der mechanischen Neutralstellung der Getriebeleerlaufstellen im Antriebsstrang ein Hauptgetriebe, ein Splitter, eine Rangegruppe und/oder ein schaltbares Verteilergetriebe angesteuert wird.

6. Steuerungsvorrichtung zur Verhinderung eines ungewollten Anrollens aus dem Stillstand in einem Antriebsstrang, welcher zumindest eine automatisierte Kupplung, zumindest ein automatisiertes Schaltgetriebe und zumindest eine Getriebeleerlaufstelle im Antriebsstrang aufweist, an welcher eine mechanische Neutralstellung des Getriebes eingestellt werden kann, **dadurch gekennzeichnet, dass** innerhalb der Steuerungsvorrichtung eine Untervorrichtung vorgesehen ist, mit welcher bei einer Schaltung zumindest des automatisierten Schaltgetriebes in die Neutralstellung an zumindest zwei Getriebeleerlaufstelien im Antriebsstrang ein Signal zur Einstellung der Neutralstellung abgebbar ist und eine Untereinheit vorgesehen ist, mittels der zum Zeitpunkt einer Schaltung des zumindest einen automatisierten Schaltgetriebes in die Neutralstellung an zumindest eine geöffnete Kupplung zumindest so lange ein Öffnungssignal abgegeben wird, bis an der Steuerungsvorrichtung zumindest ein Bestätigungssignal über die Einstellung der mechanischen Neutralstellung an zumindest einer der Getriebeleerlaufstellen anliegt.

7. Steuerungsvorrichtung nach Anspruch 6, **dadurch gekennzeichnet, dass** diese derartig ausgebildet ist, dass diese das Öffnungssignal für die Kupplung so lange abgibt, bis an ihr zumindest zwei Bestätigungssignale über die Realisierung der mechanischen Neutralstellung an zumindest zwei der Getriebeleerlaufttellen anliegen.

8. Steuerungsvorrichtung nach Anspruch 6 oder 7, **dadurch gekennzeichnet, dass** mit dieser bei einer Schaltung zumindest des automatisierten Schaltgetriebes in die Neutralstellung zumindest an den beiden Getriebeleerlaufstellen deren Neutralstellung einstellbar ist, wenn durch eine Entscheidungseinheit ermittelt wird, dass die Schaltung nicht auf einen direkten Fahrerwunsch zurückzuführen ist.

9. Steuerungsvorrichtung nach einem der Ansprüche 6 bis 8, **dadurch gekennzeichnet, dass** diese zur Steuerung- und Regelung des Antriebsstranges eines Kraftfahrzeuges, insbesondere eines Nutzfahrzeuges ausgebildet ist, welcher zumindest ein automatisiertes Schaltgetriebe und/oder ein Getriebe umfasst, welches ein Hauptgetriebe, einen Splitter, eine Rangegruppe und/oder ein schaltbares Verteilergetriebe aufweist.

## Claims

1. Method in order to prevent unrequested rolling off motion from stationary position in the driveline which, at least, includes one automated clutch, at least one automated manual transmission, one control device for governing of at least one automated clutch and at least one automated manual transmission, as well as at least one transmission idling location in the driveline, where a mechanical neutral transmission position can be set, **characterized in that** the control device, in the case of a gear shift of at least the automated manual transmission to the neutral position, sets for at least two of the transmission's idling positions in the driveline to a neutral position, and **in that** the control device, at the point in time of setting at least one of the automated manual transmission to the neutral position, keeps the clutch open for the time need at minimum to get the information to the control device that at least, at the two transmission idling positions in the driveline, the mechanical neutral position was set.

2. Method according to claim 1, **characterized in that** the control device, in the case of the setting process for at least the automated manual transmission to the neutral position, engages at least the neutral position at the two transmission idling locations if the gear shift into the neutral position cannot be traced back directly to a driver request.

3. Method according to claim 1 or 2, **characterized in that** the control device will receive the information at the point in time when at least, at the two transmission idling locations in the driveline, the mechanical neutral position was set, when the corresponding sensor signal for at least one of the transmission idling locations is present, and **in that** the control device, until such information is definitely available, will prevent closing of the clutch.

4. Method according to claim 1 or 2, **characterized in that** the control device will receive the information at the point in time when at least, at the two transmission idling locations in the driveline, the mechanical neutral position was set, when the corresponding sensor signal for at least two of the transmission idling locations is present, and **in that** the control device, until this specific information is definitely available, will prevent closing of the clutch.

5. Method in accordance with one of the previous claims, **characterized in that** the setting of the mechanical neutral position of the transmission idling locations in the driveline controls a main transmission, a splitter, a range-change group, and/or an switchable transfer case.

6. Control device used in order to prevent unrequested rolling off motion from stationary position in the driveline which, at least, includes one automated clutch, at least one automated manual transmission, one control device for governing of at least one automated clutch and at least one automated manual transmission, as well as at least one transmission idling location in the driveline, where a mechanical neutral transmission position can be set, **characterized in that** within the control device a sub-unit has been installed which, in the case of a gear shift of at least the automated manual transmission to the neutral position, sets for at least two of the transmission's idling positions in the driveline to send a signal for setting the neutral position, and where a sub-unit is included where, at the point in time of a gear shift of at least one of the automated manual transmission to the neutral position, keeps the clutch open for the time need at minimum to emit an opening signal, so that at least, the information about the actuation signal gets to the control device about the setting of the mechanical neutral position at least one of the transmission idling positions.

7. Control device in accordance with claim 6, **characterized in that** this unit has been designed in such a way that the opening signal for the clutch is emitted for the time needed until there, at least, two actuation signals about the implementation of a mechanical neutral position for at least two of the transmission idling positions is present.

8. Control device according to claim 8 or 7, **characterized in that** with the control device, in the case of a gear shift, at least of the automated manual transmission to the neutral position, the neutral position can be set at least for the two transmission idling locations if, by means of a decision-making unit, it can be determined that the gear shift cannot be traced back directly to a driver request.

9. Control device according to claim 6 to 8, **characterized in that** the control device was designed for the controlling and regulation of the driveline of a commercial vehicle which, at least, comprises an automated manual transmission and/or a transmission which is made up by a main transmission, a splitter, a range-change group, and/or a switchable transfer case.

## Revendications

1. Procédé d'inhibition d'un démarrage involontaire à partir de l'arrêt dans une chaîne cinématique, celle-ci comportant au moins un embrayage automatisé, au moins une boîte mécanique automatisée, un dispositif de commande de l'au moins un embrayage automatisé et de l'au moins une boîte mécanique automatisée ainsi qu'au moins une position de ralenti de la boîte de vitesses dans la chaîne cinématique, dans laquelle il est possible de mettre la boîte de vitesses mécaniquement au point mort, **caractérisé en ce que** lors de l'enclenchement du point mort au moins dans la boîte de vitesses mécanique automatisée le dispositif de commande enclenche au moins dans deux positions de ralenti de la boîte de vitesses dans la chaîne cinématique le point mort et **en ce que** le dispositif de commande maintient au moment de l'enclenchement du point mort dans l'au moins une boîte mécanique automatisée au moins un embrayage ouvert au moins si longtemps ouvert jusqu'à ce que dans le dispositif de commande est présente l'information que au moins dans les deux positions de ralenti de la boîte de vitesses dans la chaîne cinématique a été enclenché le point mort mécanique.

2. Procédé selon la revendication 1, **caractérisé en ce que** lors d'un enclenchement du point mort dans au moins la boîte mécanique automatisée le dispositif de commande enclenche au moins dans les deux positions de ralenti de la boîte de vitesses le point mort si l'enclenchement du point mort n'est pas dû à un souhait direct du conducteur.

3. Procédé selon la revendication 1 ou 2, **caractérisé en ce que** l'information que au moins dans les deux positions de ralenti de la boîte de vitesses dans la chaîne cinématique est enclenché le point mort est présente dans le dispositif de commande au moment où dans le dispositif de commande est présent un signal de capteur correspondant pour au moins une des positions de ralenti de la boîte de vitesses, et **en ce que** le dispositif de commande évite toute fermeture de l'embrayage avant que cette information ne soit pas transmise.

4. Procédé selon la revendication 1 ou 2, **caractérisé en ce que** l'information que au moins dans les deux positions de ralenti de la boîte de vitesses dans la chaîne cinématique est enclenché le point mort est présente dans le dispositif de commande au moment où dans le dispositif de commande est présent un signal de capteur correspondant pour au moins deux de ces positions de ralenti de la boîte de vitesses, et **en ce que** le dispositif de commande évite toute fermeture de l'embrayage avant que cette information ne soit pas transmise.

5. Procédé selon une des revendications précédentes, **caractérisé en ce que** pour l'enclenchement de la position de point mort mécanique dans les positions de ralenti de la boîte de vitesses dans la chaîne cinématique est pilotée une boîte de base, un doubleur de gamme, un groupe-relais et/ou une boîte de transfert enclenchable.

6. Dispositif de commande pour l'inhibition d'un démarrage involontaire à partir de l'arrêt dans une chaîne cinématique, celle-ci comportant au moins un embrayage automatisé, au moins une boîte mécanique automatisée et au moins une position de ralenti de la boîte de vitesses dans la chaîne cinématique, dans laquelle il est possible de mettre la boîte de vitesse mécaniquement au point mort, **caractérisé en ce que** à l'intérieur du dispositif de commande est prévu un sous-dispositif, à l'aide duquel lors d'un enclenchement du point mort au moins dans la boîte mécanique automatisée il est possible de transmettre un signal d'enclenchement du point mort dans au moins deux positions de ralenti de la boîte de vitesses dans la chaîne cinématique et **en ce qu'**il est prévue une sous-unité, à l'aide de laquelle au moment de l'enclenchement du point mort dans l'au moins une boîte mécanique automatisée le signal d'ouverture est émis à au moins un embrayage ouvert au moins si longtemps jusqu'à ce que dans le dispositif de commande est présent au moins un signal d'actionnement pour l'enclenchement du point mort mécanique dans au moins une des positions de ralenti de la boîte de vitesses.

7. Dispositif de commande selon la revendication 6, **caractérisé en ce que** celui-ci est réalisé de manière à ce qu'il émet le signal d'ouverture de l'embrayage si longtemps jusqu'à ce que sur l'embrayage soient présents au moins deux signaux d'actionnement pour confirmer la réalisation de la mise au point mort mécanique dans au moins deux des positions de ralenti de la boîte de vitesses.

8. Dispositif de commande selon la revendication 8 ou 7, **caractérisé en ce que** à l'aide de celui-ci - lors de l'enclenchement du point mort au moins dans la boîte mécanique automatisée - au moins dans les deux positions de ralenti de la boîte de vitesses peut être enclenché le point mort correspondant lorsque à l'aide d'une unité de décision est déterminé que l'enclenchement du point mort n'est pas dû à un souhait direct du conducteur.

9. Dispositif de commande selon une des revendications 6 à 8, **caractérisé en ce que** celui-ci est réalisé de manière à en pouvoir réaliser la commande et le réglage de la chaîne cinématique d'un véhicule automobile, en particulier de celle d'un véhicule industriel, comprenant au moins une boîte mécanique automatisée et/ou une boîte de vitesses, comportant une boîte de base, un doubleur de gamme, un groupe-relais et/ou une boîte de transfert enclenchable.
